# EUROPÄISCHE PATENTSCHRIFT

(11) **EP 2 875 560 B1**
(45) Veröffentlichungstag und Bekanntmachung des Hinweises auf die Patenterteilung: **12.10.2016**
(21) Anmeldenummer: 12743945.3
(22) Anmeldetag: 19.07.2012
(51) Int. Cl.: H02J 3/00, H02J 3/14, H02J 3/38

(54) **VERFAHREN ZUM REGELN DES VERHÄLTNISSES ZWISCHEN EINGESPEISTER UND ENTNOMMENER ELEKTRISCHER ENERGIE IN EINEM ELEKTRISCHEN ENERGIEVERSORGUNGSNETZ**
METHOD FOR CONTROLLING THE RATIO BETWEEN SUPPLIED AND DRAWN ELECTRIC ENERGY IN AN ELECTRIC ENERGY SUPPLY NETWORK
PROCÉDÉ DE RÉGLAGE DU RAPPORT ENTRE L'ÉNERGIE ÉLECTRIQUE INJECTÉE ET PRÉLEVÉE DANS UN RÉSEAU D'ALIMENTATION EN ÉNERGIE ÉLECTRIQUE

(43) Veröffentlichungstag der Anmeldung: 27.05.2015
(73) Patentinhaber: Easy Smart Grid GmbH, 76139 Karlsruhe (DE)
(72) Erfinder: WALTER, Thomas, Joachim, 76139 Karlsruhe (DE)
(74) Vertreter: Lemcke, Brommer & Partner Patentanwälte Partnerschaft mbB
(86) Internationale Anmeldenummer: PCT/EP2012/064219
(87) Internationale Veröffentlichungsnummer: WO 2014/012595

(56) Entgegenhaltungen:
- EP-A1- 1 914 420
- EP-A1- 2 075 890
- WO-A1-2007/052349
- US-A1- 2003 155 773
- US-A1- 2004 010 478
- US-A1- 2012 080 420

## Beschreibung

Die Erfindung betrifft ein Verfahren zum Regeln des Verhältnisses zwischen eingespeister und entnommener elektrischer Energie in einem elektrischen Energieversorgungsnetz gemäß dem Oberbegriff des Anspruchs 1. Dieses Energieversorgungsnetz umfasst eine Anzahl von Netzteilnehmern, die aus einer Gruppe, bestehend aus Erzeugern, Verbrauchern und Speichern ausgewählt sind, wobei mindestens zwei Elemente dieser Gruppe vorhanden sein müssen. Als Regelgröße zum Regeln des Verhältnisses zwischen eingespeister und entnommener elektrischer Energie wird eine Netzzustandsvariable verwendet, deren Wert vom Verhältnis zwischen eingespeister und entnommener elektrischer Energie abhängt und die von den Netzteilnehmern aus dem Netz ermittelbar ist. Weiterhin betrifft die Erfindung ein elektrisches Energieversorgungsnetz gemäß dem Oberbegriff des Anspruchs 7.

Der Oberbegriff der unabhängigen Ansprüche ist aus Druckschrift EP 1 914 420 A1 bekannt.

Der Erfindung liegt folgendes technische Problem zugrunde: In elektrischen Energieversorgungsnetzen mit einer Anzahl von Netzteilnehmern muss die Summe aus eingespeister und entnommener elektrischer Energie in etwa Null sein, um das Netz stabil betreiben zu können. Abweichungen vom Gleichgewicht zwischen Erzeugung und Verbrauch von elektrischer Energie können zu einer Überlastung des Energieversorgungsnetzes und/oder zu einer Unterversorgung der Netzteilnehmer mit elektrischer Energie führen. Wenn die Abweichungen zu groß sind, kann dies zum Zusammenbrechen des Netzes führen. Daher ist eine aktive Stabilisierung bzw. Regelung des elektrischen Energieversorgungsnetzes erforderlich. Dies ist herkömmlich Aufgabe der Netzbetreiber, also der großen Energieversorger.

Durch den vermehrten Einsatz erneuerbarer Energien lässt sich elektrische Energie jedoch nicht mehr ohne weiteres zentral bedarfsgerecht zur Verfügung stellen. Durch alternative Energieerzeugungsformen, wie zum Beispiel bei der Solar- oder Windenergie, wird die Energieerzeugung zunehmend jahreszeiten- und wetterabhängig. Zusätzlich verlagert sich die Energieerzeugung gemessen an der bisherigen Situation dezentral hin zu kleineren Einheiten. Dadurch nimmt der Einfluss der großen Energieerzeuger und damit der Netzbetreiber auf die elektrischen Energieversorgungsnetze und somit auf die Netzstabilität ab.

Aus dem Stand der Technik sind verschiedene Methoden zur Netzstabilisierung bekannt:
Elektrische Energieversorgungsnetze sind herkömmlich derart organisiert, dass in einem elektrischen Energieversorgungsnetz mehrere Netzteilnehmer, darunter Energieerzeuger, Energieverbraucher und Energiespeicher, zusammengeschlossen sind. Dabei können einzelne Netzteilnehmer, so wie dieser Begriff im Rahmen der vorliegenden Erfindung zu verstehen ist, sowohl als Verbraucher und/oder Erzeuger und/oder Speicher oder nur als Verbraucher, Erzeuger oder Speicher agieren.

Aufgrund des individuellen Netzteilnehmerverhaltens der einzelnen Netzteilnehmer, was Energieverbrauch, d. h. die Entnahme von elektrischer Energie aus dem Energieversorgungsnetz, und Energieerzeugung, das heißt die Einspeisung elektrischer Energie in das Energieversorgungsnetz, betrifft, treten in dem elektrischen Energieversorgungsnetz Abweichungen zwischen Angebot und Bedarf an elektrischer Energie auf. Es ist die Pflicht der Netzbetreiber des elektrischen Energieversorgungsnetzes, diese Abweichungen zu regulieren und dadurch die Netzstabilität des elektrischen Energieversorgungsnetzes zu garantieren. Die Aufgabe, eine Unterversorgung der Gesamtheit der Netzteilnehmer mit elektrischer Energie zu vermeiden und eine Überlastung des elektrischen Energieversorgungsnetzes zu verhindern ist also zentrale Aufgabe einiger weniger großer Energieerzeuger.

Dafür besitzen die großen Energieerzeuger Regeleinrichtungen, welche mit Algorithmen versehen sind, die Maßnahmen zur Regulierung der Netzstabilität auslösen. Als Maß für die Netzstabilität wird als Regelgröße eine Netzzustandsvariable verwendet, die mit dem Netzzustand verknüpft ist. Die Netzzustandsvariable wird in einem vorbestimmten Sollbereich um eine Basisgröße gehalten. Beispiele für die Netzzustandsvariablen sind die Netzfrequenz oder die Spannung.

Im Folgenden soll dies am Beispiel der Netzfrequenz als Regelgröße weiter ausgeführt werden:
Der Basiswert der Netzfrequenz liegt standardmäßig in Europa bei 50 Hz und in den Vereinigten Staaten von Amerika bei 60 Hz. Der Basiswert ist der Sollwert für die Netzfrequenz, sodass jede Abweichung vom Basiswert Regelbedarf für die Netzstabilität signalisiert. Besteht ein Überschuss der Energieerzeugung gegenüber dem Energieverbrauch, steigt die Netzfrequenz an. Besteht einen Überschuss des Energieverbrauchs gegenüber der Energieerzeugung, sinkt die Netzfrequenz ab. Detektiert der Netzbetreiber eine Frequenzabweichung vom Basiswert, erfolgt eine Regulierung der Netzlast, d. h. der Netzbetreiber ergreift zentral Maßnahmen, die zu einer Korrektur der Abweichung und damit zu einer Netzstabilisierung führen:
   Fällt die Netzfrequenz unter den Basiswert, speist der Netzbetreiber vermehrt elektrische Energie in das elektrische Energieversorgungsnetz ein. Steigt die Netzfrequenz über den Basiswert, muss der Netzbetreiber elektrische Energie aus dem elektrischen Energieversorgungsnetz entnehmen. Mögliche Regulierungsmechanismen sind hier der Einsatz von kleineren flexiblen Kraftwerkseinheiten und zusätzlichen Verbrauchern sowie notfalls das Abschalten einzelner Netzzonen oder Verbraucher. Durch das Zuschalten flexibler Kraftwerkseinheiten kann in Zeiten erhöhten Bedarfs, wenn die Netzfrequenz unter die Basisgröße fällt, eine Unterversorgung vermieden werden. Einige Kraftwerkstypen, wie zum Beispiel Windkraftwerke, können auch als Verbraucher eingesetzt werden, um so ein Überangebot an Energie aufzufangen (DE 10 2005 049 426 A1). Nachteilig ist hier jedoch, dass die in diesem Zeitabschnitt überschüssige Energie verloren geht und dadurch hohe zusätzliche Kosten verursacht werden.

Eine andere Möglichkeit zur Netzstabilisierung sind Speicherkraftwerke. Speicherkraftwerke nehmen überschüssige Energie in Zeitabschnitten mit einem Überangebot an Energie auf. Diese überschüssige Energie wird z. B. in einem Pumpspeicherkraftwerk oder einem Wärmespeicherkraftwerk gespeichert. In Zeitabschnitten mit einem Unterangebot an Energie, kann die gespeicherte Energie dem elektrischen Energieversorgungsnetz wiederum zugeführt werden. Dadurch lassen sich Energieversorgungsspitzen, die zur Überlastung des elektrischen Energieversorgungsnetzes führen, abfangen und eine Unterversorgung der Netzteilnehmer mit elektrischer Energie vermeiden. Die vorhandenen Speichertechnologien sind jedoch in Bezug auf Kosten, Wirkungsgrad und Lebensdauer nicht in der Lage, das Problem der Netzwerkstabilisierung langfristig zu lösen. Vor allem in Bezug auf den vermehrten Einsatz jahreszeiten- und wetterabhängiger erneuerbarer Energieformen in dezentralen Erzeugungseinheiten sind die Kapazitäten der Speichertechnologien schnell erreicht.

Weiter sind aus dem Stand der Technik Konzepte bekannt, die den Energieverbrauch der aktuell verfügbaren Energie anpassen und umgekehrt die Energieerzeugung dem aktuellen Energiebedarf anpassen (DE 10 2010 030 093 A1). Diese Ansätze sind als Smart-Grid-Technologien bekannt. Energieerzeuger und Energieverbraucher müssen hier in der Lage sein miteinander zu kommunizieren und so Informationen über den aktuellen und den zukünftigen Energieverbrauch, das heißt den Energiebedarf und die aktuell verfügbare Energie im elektrischen Energieversorgungsnetzt auszutauschen. Alle Netzteilnehmer sind in die Kommunikation integriert, sodass im Idealfall auf der Erzeugerseite nur so viel Energie erzeugt wird, wie auch auf der Verbraucherseite benötigt wird.

Smart-Grid-Konzepte sehen hierfür den Einsatz einer vernetzten Rechnerarchitektur vor, welche die nötigen Abstimmungsprozesse und die entsprechenden Beeinflussungen von Energieerzeugern und Energieverbrauchern bewirken sollen.

Dies ist jedoch gleichzeitig der Nachteil beim Einsatz der Smart-Grid-Konzepte in Bezug auf Zuverlässigkeit und Praktikabilität, denn es muss ein stromnetzübergreifendes Kommunikationsnetz eingerichtet werden. Zusätzlich ist eine zentrale Steuerung und Koordination der dezentralen Energieentnahme- und Energieeinspeisungsprozesse nötig.

Die technische Problemstellung, ein elektrisches Energieversorgungsnetz stabil zu halten, ist angesichts des abnehmenden Einflusses der großen Energieerzeuger und der zunehmenden Menge der dezentral erzeugten elektrischen Energie und deren Schwankungen bislang nicht befriedigend gelöst.

Vor diesem Hintergrund liegt der vorliegenden Erfindung die Aufgabe zugrunde, ein Verfahren zum Regeln des Verhältnisses zwischen eingespeister und entnommener elektrischer Energie, ein elektrisches Energieversorgungsnetz sowie Netzteilnehmer für ein solches und Verfahren zum Regeln des Netzteilnehmerverhaltens nebst Steuermodulen und Software vorzuschlagen, mit dessen bzw. deren Hilfe die Netzstabilisierung nicht nur Aufgabe der großen Erzeuger ist, sondern auf eine Vielzahl von Netzteilnehmern verteilt wird, ohne jedoch ein paralleles Kommunikationsnetz mit entsprechendem energetischen und administrativen Aufwand betreiben zu müssen.

Diese Aufgabe wird erfindungsgemäß gelöst durch ein Verfahren mit den Merkmalen des Anspruchs 1, ein elektrisches Energieversorgungsnetz mit den Merkmalen des Anspruchs 11, einen Netzteilnehmer mit den Merkmalen des Anspruchs 12, ein Steuermodul mit den Merkmalen des Anspruchs 19 und eine Software mit den Merkmalen des Anspruchs 20. Vorteilhafte Weiterbildungen der Erfindung sind Gegenstand der Unteransprüche. Der Wortlaut der Ansprüche wird hiermit durch ausdrückliche Bezugnahme in die Beschreibung aufgenommen.

Mit der vorliegenden Erfindung wird neben den bisher für die Netzstabilität verantwortlichen großen Erzeugern eine Vielzahl von weiteren Netzteilnehmern in die Lage versetzt, dezentral bei der Netzstabilisierung mitzuwirken, ohne dass dies einen kompletten Neuaufbau des elektrischen Energieversorgungsnetzes oder einen Aufbau zusätzlicher Strukturen voraussetzen würde. Vielmehr ist die vorliegende Erfindung in den bereits bestehenden Strukturen einsetzbar, und die Strukturen können nach und nach erfindungsgemäß ausgestaltet werden. Insbesondere ist es für die Verbraucher als Netzteilnehmer nicht notwendig, sondern lediglich fakultativ, stromverbrauchende Geräte auszutauschen oder nachzurüsten.

Bei dem erfindungsgemäßen Verfahren zum Regeln des Verhältnisses zwischen eingespeister und entnommener elektrischer Energie in einem elektrischen Energieversorgungsnetz mit einer Anzahl von Netzteilnehmern wird, wie an sich bekannt, als Regelgröße weiterhin eine Netzzustandsvariable verwendet, deren Wert vom Verhältnis zwischen eingespeister und entnommener elektrischer Energie in dem elektrischen Energieversorgungsnetz abhängt.

Das Neue ist nun, dass eine Anzahl von Netzteilnehmern die Netzzustandsvariable dezentral aus dem Netz ermittelt und zumindest mittelbar zur Steuerung eines eigenen spezifischen Netzteilnehmerverhaltens verwendet.

Der Erfindung liegt weiterhin die Erkenntnis zugrunde, dass die Verlagerung der Aufgabe der Netzstabilisierung weg von den Betreibern des Energieversorgungsnetzes hin zu den individuellen Netzteilnehmern nur durch die dezentrale Anwendung der Marktgesetze bei einer Anzahl Netzteilnehmern eines Energieversorgungsnetzes optimal ermöglicht wird. Das individuelle spezifische Netzteilnehmerverhalten eines jeden Netzteilnehmers trägt in Kombination mit dem individuellen spezifischen Netzteilnehmerverhalten der anderen Netzteilnehmer in der Gesamtheit zu einer Netzstabilisierung des elektrischen Energieversorgungsnetzes bei.

Erfindungsgemäß wird nicht der Weg einer direkten automatischen, zentralen oder dezentralen Regelung der Netzteilnehmer beschritten. Denn dies hätte bei einer Mehrzahl von Netzteilnehmern den Nachteil, dass weder auf den individuellen Bedarf noch auf technisch optimale Betriebsweisen, beispielsweise hinsichtlich eines optimalen Wirkungsgrads, Rücksicht genommen werden kann. Die Anzahl von Netzteilnehmern, die ohne Einsatz der Marktgesetze direkt anhand einer bestimmten Regelgröße gesteuert werden kann, ist beschränkt und kann in der Gesamtheit die vorliegende Aufgabe nicht lösen.

Damit die Netzteilnehmer dezentral zur Netzstabilisierung beitragen, werden im Rahmen der vorliegenden Erfindung bevorzugt Anreize gesetzt, die für jeden Netzteilnehmer individuell vorteilhaft sind. Diese individuellen Anreize müssen derart gesetzt werden, dass sie in der Gesamtheit aller Netzteilnehmer zur Netzstabilisierung führen. Dazu müssen die Netzteilnehmer in die Lage versetzt werden, die Marktgesetze selbständig umsetzen zu können, was durch einen weiteren Aspekt der vorliegenden Erfindung gelöst ist:
In einem elektrischen Energieversorgungsnetz mit einer Anzahl von Netzteilnehmern, bestehend aus Erzeugern und/oder Verbrauchern und/oder Speichern, dient als Regelgröße eine Netzzustandsvariable, deren Wert vom Verhältnis zwischen eingespeister und entnommener elektrischer Energie abhängt. Diese Netzzustandsvariable ist zumindest von einem Teil der Netzteilnehmer aus dem Energieversorgungsnetz ermittelbar und kann beispielsweise die Netzfrequenz sein. Dabei ist die Netzzustandsvariable mit einer Bewertungsvariablen verknüpft. Bei einem optimalen Verhältnis zwischen eingespeister und entnommener elektrischer Energie weist die Bewertungsvariable einen Basiswert auf. Bei einer Abweichung von diesem optimalen Verhältnis weist die Bewertungsvariable einen Wert auf, der vom Basiswert abweicht. Die Abweichung der Bewertungsvariablen vom Basiswert gestaltet sich derart, dass, bei einem Überschuss von eingespeister elektrischer Energie, das Einspeisen von elektrischer Energie in das Netz mit einem Maluswert für die Netzteilnehmer und das Entnehmen von elektrischer Energie aus dem Netz mit einem Bonuswert für die Netzteilnehmer versehen ist. Analog dazu ist die Abweichung der Bewertungsvariable vom Basiswert bei einem Überschuss von entnommener elektrischer Energie derart ausgestaltet, dass das Einspeisen von elektrischer Energie in das Netz mit einem Bonuswert für die Netzteilnehmer und das Entnehmen von elektrischer Energie aus dem Netz mit einem Maluswert für die Netzteilnehmer versehen wird.

Der Netzteilnehmer ermittelt die Netzzustandsvariable und/oder die Abweichung der Netzzustandsvariablen vom Basiswert dezentral aus dem Energieversorgungsnetz und verwendet diese zumindest mittelbar zur Steuerung eines eigenen spezifischen Netzteilnehmerverhaltens. Das eigene spezifische Netzteilnehmerverhalten wird hierbei von jedem erfindungsgemäß ausgestalteten Netzteilnehmer individuell so gesteuert, dass jeweils möglichst wenig Maluswerte und/oder möglichst viele Bonuswerte generiert werden.

Vorteilhafterweise trägt die Optimierung des eigenen spezifischen Netzteilnehmerverhaltens eines jeden Netzteilnehmers in ihrer Gesamtheit zur Stabilisierung des gesamten elektrischen Energieversorgungsnetzes bei. Dabei hat der individuelle Netzteilnehmer nicht die Stabilisierung des elektrischen Energieversorgungsnetzes sondern die Optimierung seines eigenen spezifischen Entnahme- und Einspeiseverhaltens als Ziel. Aufgrund der Vielzahl der Netzteilnehmer trägt die Optimierung des individuellen Netzteilnehmerverhaltens implizit zur Netzstabilisierung des elektrischen Energieversorgungsnetzes bei. Dabei benötigt das erfindungsgemäße Verfahren keine zusätzlichen Kommunikationseinrichtungen. Die benötigten Informationen können vom Netzteilnehmer dezentral über die Netzzustandsvariable direkt aus dem elektrischen Energieversorgungsnetz ermittelt werden.

Erfindungsgemäß kann das spezifische Netzteilnehmerverhalten jedoch jederzeit von den eigenen Bedürfnissen des Netzteilnehmers abhängig gemacht werden, die gegebenenfalls einer Stabilisierung des Netzes vorgehen. Gleichzeitig können Netzteilnehmer unverändert am Netz bleiben, auch wenn sie die Netzzustandsvariable nicht ermitteln und ihr Netzteilnehmerverhalten nicht anhand der Netzzustandsvariable regeln können. Die Erfindung ist also vorteilhafterweise rückwärtskompatibel.

In einer vorzugsweisen Ausführungsform ist die Netzzustandsvariable und damit die Bewertungsvariable direkt an den Preis für eine Energieeinheit gekoppelt. Eine hohe Bewertungsvariable bedeutet einen hohen Preis für eine Energieeinheit, eine niedrige Bewertungsvariable bedeutet einen niedrigen Preis für eine Energieeinheit.

In einer weiteren vorzugsweisen Ausführungsform wird die Netzzustandsvariable in bestimmten Zeitabständen, insbesondere bevorzugt laufend, dezentral bei mindestens einem Teil der Netzteilnehmer ermittelt und das spezifische Netzteilnehmerverhalten dynamisch angepasst.

In einer weiteren vorzugsweisen Ausführungsform wird das eigene spezifische Netzteilnehmerverhalten abhängig von der Netzzustandsvariablen und/oder einer Bewertungsvariable gesteuert. Vorteilhafterweise wird als Bewertungsvariable ein variabler Preis für eine elektrische Energieeinheit verwendet. Bei einem

Überangebot an Energie sinkt der Preis pro Energieeinheit und somit auch die Bewertungsvariable. Energieverbraucher oder Energiespeicher, die in diesem Zeitabschnitt Energie aus dem Energieversorgungsnetz entnehmen, zahlen also den niedrigen Preis. Energieerzeuger oder Energiespeicher, die in diesem Zeitabschnitt Energie in das Energieversorgungsnetz einspeisen, erlösen dafür einen niedrigeren Preis pro Energieeinheit. Energieverbraucher oder Energiespeicher, die ihr Netzteilnehmerverhalten auf Basis der Bewertungsvariablen steuern, entnehmen in diesem Zeitabschnitt also bevorzugt Energie, um zum Beispiel zeitunkritische Prozesse ablaufen zu lassen oder Energiespeicher zu befüllen. Dadurch werden Energieerzeuger oder Energiespeicher, die ihr Netzteilnehmerverhalten auf Basis der Bewertungsvariablen steuern, in diesem Zeitabschnitt so wenig Energie wie möglich in das elektrische Energieversorgungsnetz einspeisen. Das Netzteilnehmerverhalten wirkt also der Abweichung der Bewertungsvariablen vom Basiswert entgegen. Die Folge ist eine automatische Selbststabilisierung des elektrischen Energieversorgungsnetzes.

Bei einer Verknappung der Energie ändert sich die Netzzustandsvariable und damit auch die Bewertungsvariable. Der Preis pro Energieeinheit steigt an. Energieverbraucher oder Energiespeicher, die in diesem Zeitabschnitt Energie aus dem Energieversorgungsnetz entnehmen, zahlen also den höheren Preis. Energieerzeuger oder Energiespeicher, die in diesem Zeitabschnitt Energie in das Energieversorgungsnetz einspeisen, erlösen dafür einen höheren Preis pro Energieeinheit. Analog zu der oben beschriebenen Situation wird sich das individuelle Netzteilnehmerverhalten ändern: Energieverbraucher oder Energiespeicher, die ihr Netzteilnehmerverhalten auf Basis der Bewertungsvariablen steuern, entnehmen in diesem Zeitabschnitt so wenig Energie wie möglich und verschieben zum Beispiel zeitunkritische Prozesse. Energieerzeuger oder Energiespeicher, die ihr Netzteilnehmerverhalten auf Basis der Bewertungsvariablen steuern, speisen in diesem Zeitabschnitt so viel Energie wie möglich in das elektrische Energieversorgungsnetz ein, um einen möglichst hohen Preis pro Energieeinheit zu erlösen. Dadurch wirkt das individuelle Netzteilnehmerverhalten also auch hier der Abweichung der Bewertungsvariablen vom Basiswert entgegen. Wiederum ist die Folge eine automatische Selbststabilisierung des Netzes.

Durch die Verknüpfung der Bewertungsvariablen mit dem Preis pro Energieeinheit werden für die individuellen Netzteilnehmer Anreize gesetzt, Energie bevorzugt in den Zeitabschnitten eines Überangebots aus dem Energieversorgungsnetz zu entnehmen und Energie bevorzugt in den Zeitabschnitten mit einem knappen Energieangebot einzuspeisen. Als Folge daraus wirkt die Optimierung des eigenen spezifischen Netzteilnehmerverhaltens, das heißt das Verfolgen individueller Interessen der Netzteilnehmer in seiner Gesamtheit stabilisierend auf das elektrische Energieversorgungsnetz.

Mit der vorliegenden Erfindung kann nun auch das technisch bisher nicht befriedigend gelöste, sogenannte Schwarmstromkonzept realisiert werden. Es handelt sich hierbei um eine Vielzahl von kleinen Blockheizkraftwerken (µBHKW), die beispielsweise aus fossilen Brennstoffen sowohl elektrische Energie als auch nutzbare thermische Energie erzeugen und aufgrund des hierdurch entstehenden Gesamtwirkungsgrades ein sehr hohes Energieeinsparungspotential realisieren. Die einzelnen Mikro-Blockheizkraftwerke sind dezentral in Ein- oder Mehrfamilienhäusern untergebracht, wo die erzeugte thermische Energie vor Ort genutzt werden kann, ohne verlustbehaftete Transportstrecken zurücklegen zu müssen. Die beim Betrieb des Blockheizkraftwerks entstehende elektrische Energie wird direkt in das elektrische Energieversorgungsnetz eingespeist. Die thermische Energie kann problemlos und im Vergleich zur elektrischen Energie sehr viel kostengünstiger gespeichert werden, so dass der "Schwarm" einer Vielzahl von kleinen und kleinsten Blockheizkraftwerken stromgeführt betrieben werden kann, also im Wesentlichen dann läuft, wenn der Bedarf an elektrischer Energie im Netz hoch ist.

Da die genannten Blockheizkraftwerke erfindungsgemäß ausgestaltet sind, ermitteln sie die Netzzustandsvariable dezentral aus dem Netz und erkennen hierdurch selbst, wenn im Netz Bedarf an eingespeister elektrischer Energie besteht. Abhängig vom Zustand des thermischen Speichers und/oder des aktuellen Bedarfs an thermischer Energie regelt sich jedes einzelne Blockheizkraftwerk des Schwarms selbständig so, dass elektrische Energie möglichst nur dann in das Netz eingespeist wird, wenn hierzu Bedarf besteht. In der Gesamtheit des "Schwarms" an Blockheizkraftwerken führt dies zu einer effizienten und bedarfsgerechten Erzeugung bzw. Einspeisung elektrischer Energie, auch wenn die einzelnen Blockheizkraftwerke des Schwarms vorteilhafterweise nicht starr an den Bedarf des elektrischen Netzes gekoppelt sind, sondern die individuellen Bedarfssituationen jeweils mit berücksichtigen.

Im Rahmen der vorliegenden Erfindung kann ein solches Schwarmkonzept mit einer Vielzahl von kleinen und kleinsten Blockheizkraftwerken also problemlos realisiert werden, ohne, wie dies bislang versucht wird, eine leistungsfähige Übertragungs- und Automatisierungstechnik für eine zentrale Steuerung der Blockheizkraftwerke installieren und betreiben zu müssen.

Im Rahmen der vorliegenden Erfindung ist es nun auch möglich, als Netzteilnehmer ein Geschäftsmodell umzusetzen, mit welchem dem Energieversorgungsnetz nur zu dem Zweck elektrische Energie entnommen wird, um sie dem Netz zu einem anderen Zeitpunkt, zu dem der Preis pro Energieeinheit höher ist, wieder zuzuführen. Es werden sich also von selbst energiespeichernde Netzteilnehmer herausbilden, die zusätzlich zur Netzstabilisierung beitragen. Dezentrale Energieerzeuger, wie beispielsweise Inhaber von Photovoltaikanlagen, erhalten im Rahmen der vorliegenden Erfindung zusätzliche Anreize, Speichermöglichkeiten zu installieren, um die erzeugte elektrische Energie in einem Puffer zu speichern, so dass sie erst zu Zeiten eines erhöhten Bedarfs eingespeist wird. Hierdurch werden die problematischen Schwankungen in der elektrischen Energieerzeugung durch regenerative Energien ausgeglichen.

In einer weiteren vorzugsweisen Ausführungsform wird die Netzzustandsvariable zwischen einer Maximalgröße und einer Minimalgröße um den Basiswert gehalten. Verlässt die Netzzustandsvariable den Bereich zwischen der Maximalgröße und der Minimalgröße, ergreift der Netzbetreiber zentrale Regulierungsmaßnahmen, die die Netzzustandsvariable im Sollbereich zwischen Maximal- und Minimalgröße halten. Hierzu kann beispielsweise notfalls das Abschalten von Teilen des Netzes gehören.

Vorteilhafterweise wird die Netzzustandsvariable und damit die Bewertungsvariable über einen bestimmten Zeitraum, bevorzugt 24 Stunden, durch zusätzliche zentrale Steuerungsmaßnahmen im Durchschnitt konstant auf dem Basiswert gehalten. Netzteilnehmer, die keine Steuerung ihres Entnahme- und/oder Einspeisungsverhaltens in Abhängigkeit der Netzzustandsvariablen vornehmen, zahlen also im Durchschnitt den mit dem Basiswert verknüpften Preis pro Energieeinheit.

In einer weiteren vorteilhaften Ausführungsform wird das eigene spezifische Netzteilnehmerverhalten mittels eines spezifischen Algorithmus, der eine spezifische zeitabhängige Bedarfsfunktion berücksichtigt, gesteuert. Dieser Algorithmus kann von jedem Netzteilnehmer individuell ausgestaltet sein.

Bevorzugt enthält die Bedarfsfunktion Grenzgrößen für die Abweichung der Netzzustandsvariablen vom Basiswert. Bei Erreichen der Grenzgrößen ändert sich das spezifische Netzteilnehmerverhalten. Insbesondere bevorzugt sind die Grenzgrößen der Bedarfsfunktion variabel ausgestaltet.

In einer weiteren vorteilhaften Ausführungsform berücksichtigt die spezifische zeitabhängige Bedarfsfunktion Parameter wie Zeitdauer bis zur nächsten Nutzung eines Verbrauchers, Ladezustand eines Speichers und Risikoverhalten des Netzteilnehmers in Bezug auf den Preis pro Energieeinheit.

Insbesondere bevorzugt enthält der eigene spezifische Algorithmus Prognosen über einen wahrscheinlichen zukünftigen Verlauf des Wertes der Bewertungsvariablen. Dadurch werden die Netzteilnehmer in die Lage versetzt, ihr individuelles Netzteilnehmerverhalten, das heißt ihr aktuelles und zukünftiges Einspeisungs- und Entnahmeverhalten zu optimieren. Mit Hilfe von Erfahrungswerten kann das eigene spezifische Netzteilnehmerverhalten dahingehend optimiert werden, dass zeitunkritische Einspeisungs- und Entnahmeprozesse in hinsichtlich der Generierung von Bonus- und Maluswerten vielversprechendere Zeitabschnitte verschoben werden.

Vorteilhafterweise verknüpft der spezifischen Algorithmus die spezifische zeitabhängige Bedarfsfunktion so mit den Prognosen über einen wahrscheinlichen zukünftigen Verlauf des Wertes der Bewertungsvariablen, dass möglichst wenig Maluswerte und/oder möglichst viele Bonuswerte generiert werden. Insbesondere bevorzugt berücksichtigt der eigene spezifische Algorithmus hierbei das individuelle Risikoverhalten des spezifischen Netzteilnehmers.

In einer weiteren vorzugsweisen Ausführungsform wird der Wertebereich um den Basiswert der Netzzustandsvariablen zwischen Minimalwert und Maximalwert in mehrere Teilbereiche, beispielsweise in 256 Teilbereiche, aufgespalten. Hierbei wird jedem Teilbereich ein Teilbereichswert der Bewertungsvariablen, beispielsweise zwischen 0 und 255, zugeordnet.

Auf Seiten der Netzteilnehmer wird dann ein Prioritätsalgorithmus verwendet, der einen momentanen Prioritätswert ermittelt. Vorteilhafterweise liegt der Prioritätswert im Wertebereich der Bewertungsvariablen. Die Netzteilnehmer vergleichen ihren Prioritätswert in bestimmten Zeitabständen, bevorzugt laufend mit dem Wert der Bewertungsvariablen. Stimmt der momentane Prioritätswert mit dem aktuellen Teilbereichswert der Bewertungsvariablen überein, ändern die Netzteilnehmer ihr eigenes spezifisches Netzteilnehmerverhalten. Bevorzugt wird ein Netzteilnehmer, der als Verbraucher oder Speicher ausgestaltet ist, bei Absinken der Bewertungsvariablen unter seinen Prioritätswert die Entnahme elektrischer Energie aus dem Energieversorgungsnetz stoppen, wohingegen beim Anstieg der Bewertungsvariablen auf den Prioritätswert die Entnahme elektrischer Energie aus dem Energieversorgungsnetz seitens des Verbrauchers gestartet wird. Ein Erzeuger wird entsprechend einspeisen oder die Einspeisung stoppen. Hierbei kann je nach Erfordernis des als Netzteilnehmer verwendeten Geräts eine Verzögerungsschaltung oder eine Hystereseschaltung vorgesehen sein, um die Ein- und Ausschaltzyklen für das entsprechende Gerät verträglich zu halten.

In einer weiteren vorzugsweisen Ausführungsform entspricht der minimale Prioritätswert einer Notfallpriorität. Das heißt, ein Verbraucher mit dem minimalen Prioritätswert hat uneingeschränkten Zugriff auf das elektrische Energieversorgungsnetz und wird unabhängig vom Wert der Netzzustandsvariablen nicht ausgeschaltet. Analog entspricht der maximale Prioritätswert einer Priorität für einen Verbraucher, der nur eingeschaltet wird, wenn die Bewertungsvariable den höchsten Teilwert erreicht. Dieser Verbraucher wird also nur eingeschaltet, wenn die Netzzustandsvariablen ihren maximal zulässigen Wert erreicht und Regulierungsmaßnahmen zum Erhalt der Netzwerkstabilität nötig sind.

Die Prioritäten der einzelnen Netzteilnehmer können sich ändern. So speichert beispielsweise ein Kühlschrank die Temperatur eine Weile, so dass sich bei geringem Energieangebot der Kompressor später einschalten kann. Dies kann im Algorithmus für das Netzteilnehmerverhalten durch einen sich regelmäßig verringernden Prioritätswert bewirkt werden. Bei einem Warmwasserbereiter kann beispielsweise die Endtemperatur bei geringem Energieangebot verringert werden, oder die Leistungsaufnahme wird beispielsweise durch Pulsbreitenmodulation reduziert. Die Diversität der entsprechenden Netzteilnehmerverhalten-Algorithmen über eine Vielzahl von Netzteilnehmern wirkt darüber hinaus zusätzlich stabilisierend auf das Netz.

In einer weiteren vorzugsweisen Ausführungsform wird der Wertebereich der Netzzustandsvariablen zwischen Minimalwert und Maximalwert um die Basisgröße in mehrere Teilbereiche unterschiedlicher Größe, beispielsweise in 256 Teilbereiche, aufgespalten. Hierbei kann die Größe der Teilbereiche ausgehend von der Basisgröße sowohl in Richtung des Maximalwertes als auch in Richtung des Minimalwertes abnehmen, um die Staffelung bei zunehmender Abweichung vom Stabilitätsoptimum zu verengen und so den Anreiz für netzstabilisierende Maßnahmen durch die Netzteilnehmer zu erhöhen.

Bevorzugt wird als Netzzustandsvariable die Netzfrequenz verwendet. Vorteilhafterweise wird hier die Netzfrequenz vom Betreiber des elektrischen Energieversorgungsnetzes in einem Frequenzbereich um beispielsweise 50 Hz, z. B. von 49 bis 51 Hz, gehalten. Die in diesem Frequenzbereich schwankende Netzfrequenz dient als Regelgröße und als Maß für das Verhältnis zwischen eingespeister und entnommener Energie. Eine hohe Netzfrequenz bedeutet einen Wert der Bewertungsvariablen, der die Verbraucher und/oder Energiespeicher zur Energieentnahme animiert und reduzierend auf die Energieerzeuger wirkt, eine niedrige Netzfrequenz bedeutet einen Wert der Bewertungsvariablen, der reduzierend auf die Verbraucher und/oder Energiespeicher wirkt und die Energieerzeuger zur Energieeinspeisung animiert.

Das erfindungsgemäße elektrische Energieversorgungsnetz eignet sich bevorzugt zur Durchführung des erfindungsgemäßen Verfahrens sowie zur Durchführung der oben beschriebenen Ausführungsformen des erfindungsgemäßen Verfahrens.

Der erfindungsgemäße Netzteilnehmer eignet sich bevorzugt zur Teilnahme in einem erfindungsgemäßen elektrischen Energieversorgungsnetz zur Durchführung des erfindungsgemäßen Verfahrens sowie zur Durchführung der oben beschriebenen Ausführungsformen des erfindungsgemäßen Verfahrens.

Die vorliegende Erfindung betrifft schließlich auch ein Steuermodul für einen Netzteilnehmer für ein erfindungsgemäßes elektrisches Energieversorgungsnetz, mit dem das Netzteilnehmerverhalten nach dem erfindungsgemäßen Verfahren gesteuert bzw. geregelt werden kann. Dieses Steuermodul kann Teil eines Netzteilnehmer-Geräts sein, es kann jedoch auch herkömmlich ausgestalteten Netzteilnehmergeräten einzeln oder gruppenweise, beispielsweise im Rahmen eines Gebäudemanagements, vorgeschaltet werden. Das Steuermodul kann als Software realisiert sein oder mit einer Software versehen sein, die ebenfalls Teil der vorliegenden Erfindung ist.

Ein erfindungsgemäßes Steuergerät lässt sich beispielsweise mit einem Mikrocontroller realisieren. Dieser ermittelt vorzugsweise die Netzfrequenz über einen Zähler, mittels DFT (Diskrete Fouriertransformation) oder PLL (Phase Locked Loop) und realisiert prioritätsabhängige Schaltvorgänge z. B. über einen Triac. Dieser Mikrocontroller kann mit einer Schnittstelle zu anderen Geräten (Last, Netz, Erzeuger) versehen sein sowie die Logik zur Ermittlung des aktuellen Prioritätswerts realisieren.

Gemäß bevorzugter Ausgestaltung der vorliegenden Erfindung wird also die Netzfrequenz genutzt, um den Preis einer Energieeinheit festzulegen und gleichzeitig die Information über den aktuell geltenden Preis für eine Energieeinheit an die Netzteilnehmer zu übertragen. Erzeuger und Verbraucher werden mit einem Preis pro Leistungseinheit vergütet bzw. belastet, der direkt aus der aktuellen Netzfrequenz abgeleitet wird (gegebenenfalls zu korrigieren durch andere Tarifbestandteile). Damit bildet sich innerhalb eines Netzgebietes, das mit anderen Netzgebieten gekoppelt, oder aber, z. B. durch Nutzung von Hochspannungsgleichstromübertragung entkoppelt ist, ein Energiepreis, der für alle in diesem Netzgebiet angeschlossenen Netzteilnehmer verbindlich und Grundlage für Transaktionen ist. Jeder teilnehmende Erzeuger oder Verbraucher, Speicherbetreiber oder Betreiber von Mischformen kann auf dieser Basis und mit eigenem Wissen über den Betriebszustand seiner Anlage jederzeit entscheiden, ob und wie er elektrische Energie einspeisen oder entnehmen will, und wird mit dem entsprechenden Verrechnungspreis vergütet bzw. belastet. Zusätzliche Übertragungstechnik und Handelsplattformen sind nicht erforderlich; die jeweilige Netzfrequenz kann überall im Netz mit hinreichender Genauigkeit und hinreichender zeitlicher Auflösung mit geringem Aufwand ermittelt und dokumentiert werden.

Mit der vorliegenden Erfindung wird also die technische Voraussetzung geschaffen, um in elektrischen Energieversorgungsnetzen einen netzstabilisierenden Energiehandel zu etablieren, bei dem die Netzfrequenz als Preisbildner genutzt wird. Bei hohem Preis beteiligen sich dabei entsprechend den dezentral hinterlegten Algorithmen mehr Erzeuger und weniger Verbraucher am Handel und umgekehrt.

Weitere Vorteile und Eigenschaften der vorliegenden Erfindung werden im Folgenden anhand der Figuren und anhand von Ausführungsbeispielen erläutert. Dabei zeigt:
- Figur 1: Vergleich des Energieverbrauchsprofils mit und ohne Einsatz des erfindungsgemäßen Verfahrens;
- Figur 2: Drei Energieverbrauchsprofile typischer Netzteilnehmer;
- Figur 3: schematische Darstellung der Aufspaltung des Frequenzbandes mit Priorisierung;
- Figur 4: Flussdiagramm zur schematischen Darstellung des dezentralen Lastmanagements;
- Figur 5: Ausführungsbeispiel des erfindungsgemäßen Verfahrens am Beispiel des Ladevorgangs eines Elektrofahrzeugs.

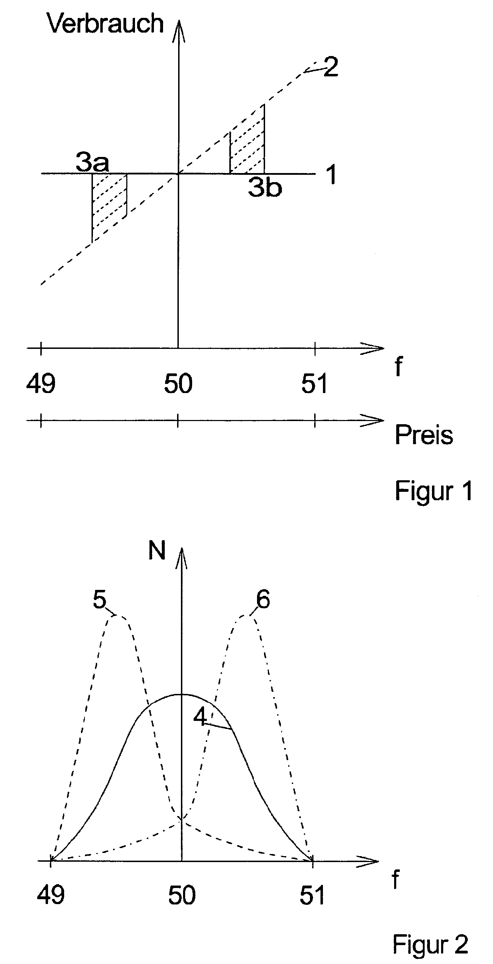

Figur 1 zeigt einen Vergleich des resultierenden Energiepreises mit und ohne Einsatz des erfindungsgemäßen Verfahrens. Auf der X-Achse aufgetragen sind die Frequenz f in Hertz und der Preis pro Energieeinheit. Der Basiswert der Frequenz beträgt hier 50 Hz und entspricht einem bestimmten Energiepreis. Der Basiswert liegt zwischen dem Minimalwert von 49 Hz und dem Maximalwert von 51 Hz. Auf der Y-Achse ist der Energieverbrauch aufgetragen. Die durchgezogene Linie 1 zeigt den Energieverbrauch eines Netzteilnehmers in einem langen Zeitraum ohne Einsatz des erfindungsgemäßen Verfahrens. Es ergibt sich ein durchschnittlicher Preis für die verbrauchte Energiemenge. Die gestrichelte Linie 2 zeigt den Verbrauch eines Netzteilnehmers im gleichen Zeitraum bei Einsatz des erfindungsgemäßen Verfahrens. Hier wird möglichst wenig Energie entnommen, wenn die Frequenz niedrig ist, das heißt, wenn der Energiepreis hoch ist. Der Anteil am Gesamtenergieverbrauch, welcher ohne Komforteinbußen für den Netzteilnehmer verschoben werden kann, dargestellt durch den schraffierten Bereich 3a, wird aus den Zeitabschnitten mit knappem Energieangebot in Zeitabschnitte mit Energieüberschuss verschoben. Zeitabschnitte mit Energieüberschuss sind Zeitabschnitte mit hohen Frequenzen und damit niedrigem Energiepreis 3b. Dadurch reduziert sich der Gesamtpreis für die verbrauchte Energiemenge des Netzteilnehmers.

Figur 2 zeigt drei Energieverbrauchsprofile typischer Netzteilnehmer. Auf der X-Achse ist die Frequenz f in Hertz und der Preis pro Energieeinheit aufgetragen. Der Basiswert der Frequenz beträgt hier 50 Hz und liegt zwischen dem Minimalwert von 49 Hz und dem Maximalwert von 51 Hz. Die Y-Achse zeigt die Anzahl N der Nutzung eines Frequenzbands eines Netzteilnehmers, das heißt wie viele Zeitabschnitte der jeweilige Netzteilnehmer über den gesamten Beobachtungszeitraum Energie entnommen hat, während der Wert der Netzfrequenz diesem Frequenzband entsprochen hat. Ein Frequenzband entspricht hier einem Teilbereich des Frequenzbereichs zwischen Minimalwert und Maximalwert der Netzfrequenz. Die Aufteilung dieses Frequenzbereichs in mehrere Teilbereiche ergibt eine Anzahl Frequenzbänder.

Die durchgezogene Linie 4 zeigt das Energieverbrauchsprofil eines Netzteilnehmers ohne Einsatz des erfindungsgemäßen Verfahrens. Der Verlauf der Kurve hat das Maximum beim Basiswert der Netzfrequenz, d. h. die häufigste Nutzung und damit Energieentnahme findet zum durchschnittlichen Energiepreis statt. Der Verlauf hin zu niedrigeren oder höheren Frequenzwerten und damit Energiepreisen ist im Wesentlichen symmetrisch und fällt ab. Da die Netzfrequenz über einen Zeitraum von 24 Stunden auf einem konstanten Wert gehalten wird, der dem Basiswert entspricht, erfolgt die durchschnittliche Nutzung eines Netzteilnehmers ohne Einsatz des erfindungsgemäßen Verfahrens beim Basiswert der Netzfrequenz. Der Durchschnittsverbraucher ohne Einsatz des erfindungsgemäßen Verfahrens bezahlt somit den Durchschnittspreis pro Energieeinheit der mit dem Basiswert der Netzfrequenz verknüpft ist.

Die gestrichelte Linie 5 zeigt den Energieverbrauch eines Verbrauchers mit Notfallpriorität. Notfallpriorität heißt, dass dieser Energieverbraucher uneingeschränkten Zugriff auf das Energieversorgungsnetz hat und unabhängig von der Netzfrequenz nicht abgeschaltet wird. Der Großteil der Energieeinheiten wird aus einem Frequenzband mit niedriger Netzfrequenz, d. h. mit hohem Preis pro Energieeinheit bezogen. Dieser Verlauf ist bei Verbrauchern möglich, die keine Potentiale haben, Energie in Zeitabschnitte mit Energieüberangebot zu verschieben und zusätzlich vor allem in Zeiten, in denen erfahrungsgemäß eine starke Nachfrage nach Energie herrscht, wie zum Beispiel tagsüber, Energie aus dem elektrischen Energieversorgungsnetz entnehmen.

Die durchbrochene Linie 6 zeigt den preisoptimierten Energieverbrauch eines Energieverbrauchers unter Einsatz des erfindungsgemäßen Verfahrens. Das Maximum der Kurve liegt im Bereich einer hohen Netzfrequenz, das heißt eines erniedrigten Preises pro Energieeinheit. Dieser Verlauf der Kurve tritt auf, wenn hauptsächlich in Zeitabschnitten mit einem Überangebot an Energie aus dem elektrischen Energieversorgungsnetz Energie entnommen wurde. Dies wird erreicht, indem zeitunkritische Energieentnahmeprozesse so weit wie möglich in Zeitabschnitte mit einem Überangebot an Energie verschoben werden. Dadurch kann eine substantielle Einsparung bei den Gesamtenergiekosten erreicht werden. Zusätzlich bewirkt dieses Netzteilnehmerverhalten bei Einsatz des erfindungsgemäßen Verfahrens einen Beitrag zur Netzwerkstabilisierung, da das Netzteilnehmerverhalten der jeweiligen Abweichung der Netzfrequenz vom Basiswert entgegenwirkt: Energie wird bevorzugt in Zeitabschnitten mit einem Überangebot im Energieversorgungsnetz entnommen wohingegen in Zeitabschnitten mit einem Unterangebot an Energie im Energieversorgungsnetz der Verbrauch auf ein Minimum eingeschränkt wird.

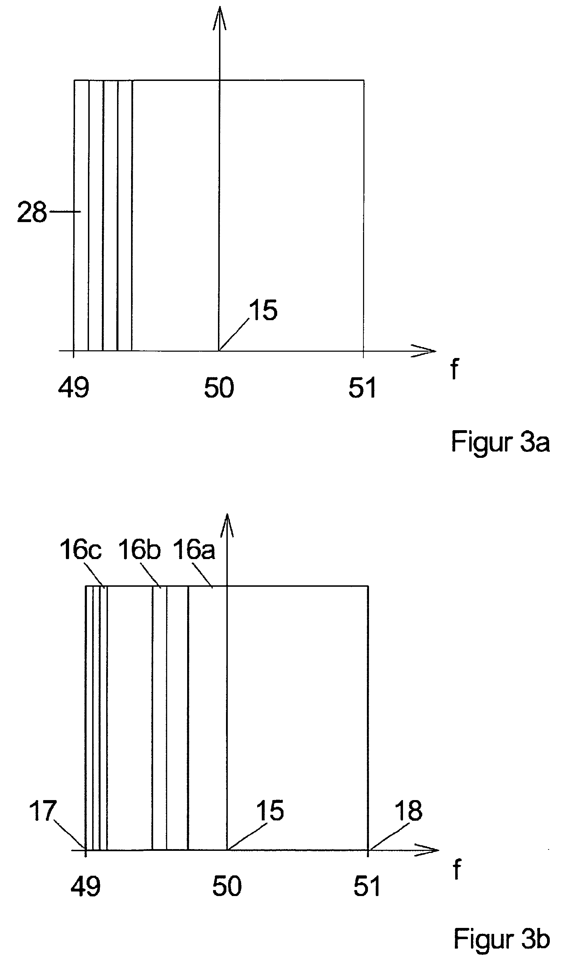

Figur 3 zeigt zwei mögliche schematische Darstellungen der Aufteilung des Frequenzbandes um den Basiswert der Netzfrequenz zwischen dem Minimalwert und dem Maximalwert und der zugehörigen Kodierung der Aufteilung des Frequenzbandes.

Figur 3a zeigt die Ausführungsform mit der Aufteilung in gleich große Teilbereiche. Auf der X-Achse ist die Netzfrequenz f in Hz um den Basiswert von 50 Hz zwischen dem Minimalwert von 49 und dem Maximalwert von 51 Hz dargestellt. Der Frequenzbereich zwischen der Minimal- und der Maximalfrequenz ist in 256 Bänder 28 aufgeteilt. Jedes dieser Frequenzbänder weist die gleiche Bandbreite von 2/256 Hz auf. Den einzelnen Frequenzbändern ist ein Frequenzkode, der einem Zahlenwert zwischen 0 und 255 entspricht, zugewiesen.

Figur 3b zeigt die Aufteilung des Frequenzbereichs um den Basiswert von 50 Hz zwischen einem Minimalwert von 49 Hz und einem Maximalwert von 51 Hz in unterschiedlich große Bereiche. Ausgehend vom Basiswert 15 nimmt die Größe der Teilbereiche 16a, 16b, 16c hin zu dem Minimalwert 17 und dem Maximalwert 18 ab. Dies ermöglicht eine exaktere Feinabstufung der Netzfrequenz in den äußeren Bereichen des Frequenzbandes. Den einzelnen Frequenzbändern ist auch hier ein Frequenzkode, der einem Zahlenwert zwischen 0 und 255 entspricht, zugewiesen.

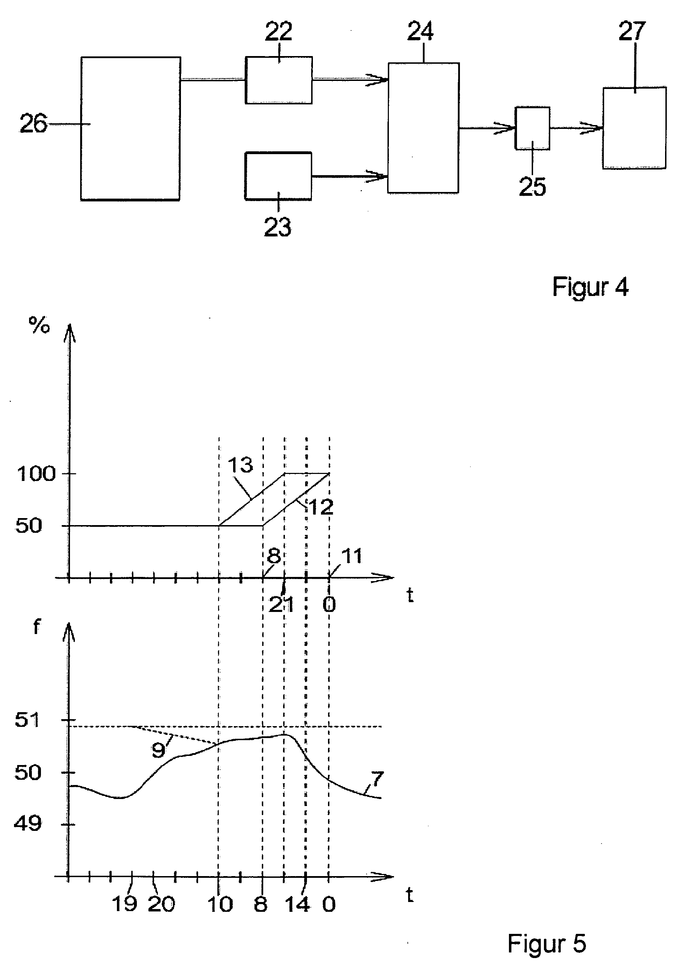

Figur 4 zeigt ein Flussdiagramm zur schematischen Darstellung des dezentralen Steuerungs- und Entscheidungsprozesses bei Einsatz des erfindungsgemäßen Verfahrens.

Aus dem elektrischen Energieversorgungsnetz 26 wird dezentral vom Netzteilnehmer mit einem Frequenzmessgerät 22 die Netzfrequenz ermittelt. Diese Netzfrequenz wird anhand eines der oben beschriebenen Schemata aus Figur 3 in einen Frequenzkode zwischen 0 und 255 umgesetzt. Parallel verwendet der Netzteilnehmer einen Prioritätsalgorithmus 23, der einen momentanen Prioritätswert ermittelt. Beispielhaft wird der Prioritätswert für einen Kühlschrank bestimmt: Ein Kühlschrank hat einen vorgegebenen Temperaturbereich, in dem die Kühlschranktemperatur gehalten werden muss. Der Kühlschrank ist durch eine entsprechende Isolierung in der Lage, die Temperatur für eine bestimmte Zeitdauer zu speichern. Während dieser Zeitdauer muss nicht zwingend gekühlt werden, der Kompressor kann also erst später eingeschaltet werden. Daraus ergibt sich für den Kühlschrank ein Prioritätswert, der einem geringen momentanen Energiebedarf entspricht. Bei fortschreitender Zeit wird sich die Priorität des Kühlschranks ändern, da die gespeicherte Temperatur sich der oberen Grenze des vorgegebenen Temperaturbereichs nähert. Der Prioritätswert sinkt dann sukzessive ab.

Der Prioritätswert liegt im Wertebereich des Frequenzkodes. Der Netzteilnehmer vergleicht seinen aktuellen Prioritätswert mit dem Wert des Frequenzkodes in einem Komparator 24. Das Ergebnis des Vergleichs wird an den Schalter 25 übermittelt. Stimmt der aktuelle Prioritätswert mit dem momentanen Wert des Frequenzkodes überein, ändert der Netzteilnehmer über den Schalter 25 sein eigenes spezifisches Netzteilnehmerverhalten. Der Schalter 25 stoppt bei Absinken des Frequenzkodes unter den Prioritätswert des Netzteilnehmers die Entnahme elektrischer Energie aus dem Energieversorgungsnetz und startet bei Anstieg des Frequenzkodes auf den Prioritätswert die Entnahme elektrischer Energie aus dem Energieversorgungsnetz seitens des Verbrauchers 27.

Dieselbe Logik mit invertierter Entscheidung ist auch für Einspeiser von elektrischer Energie, also Erzeuger und Speicher geeignet. Am Beispiel eines kleinen Blockheizkraftwerks (µBHKW) würde dies so aussehen, dass das µBHKW je nach Füllstand des angeschlossen thermischen Speichers und momentanem Bedarf an thermischer Energie, die dem thermischen Speicher entnommen wird, einen Prioritätswert festlegt. Wenn der thermische Speicher nur noch geringe Kapazität aufweist und die Entnahme an thermischer Energie gering ist, wird der Prioritätswert für das µBHKW auf einen kleinen Wert gesetzt, so dass das µBHKW erst dann eingeschaltet wird, wenn ein geringer Wert des Frequenzcodes und somit ein sehr hoher Bedarf an elektrischer Energie und ein damit verbundener hoher Erlös beim Einspeisen derselben vorliegt.

Steigt beispielsweise der Bedarf an thermischer Energie am Ort des µBHKW an, wird dessen Prioritätswert sukzessive hoch gesetzt, so dass es sich bereits bei geringerem Bedarf des Netzes an eingespeister elektrischer Energie einschaltet. Der Erlös durch das Einspeisen der elektrischen Energie ist dann zwar geringer, jedoch ist der aktuelle Bedarf an thermischer Energie in jedem Fall gesichert.

Auch ein Netzteilnehmer, der als Speicher fungiert, kann mit dieser Logik betrieben werden, wobei er seinen Prioritätswert abhängig von der ausgelasteten Speicherkapazität festlegen wird.

Figur 5 zeigt ein Ausführungsbeispiel des erfindungsgemäßen Verfahrens anhand des Ladevorgangs eines Elektrofahrzeugs.

In Figur 5a zeigt die X-Achse die Zeit in Stunden bis zur nächsten Nutzung des Elektrofahrzeugs. Zu diesem Zeitpunkt 11 muss die Batterie des Elektrofahrzeugs vollständig aufgeladen sein. Die Y-Achse zeigt hier den Ladezustand der Batterie des Elektrofahrzeugs in Prozent.

In Figur 5b zeigt die X-Achse ebenso die Zeit in Stunden bis zur Nutzung des Elektrofahrzeugs. Die Y-Achse zeigt hier die Netzfrequenz des elektrischen Energieversorgungsnetzes mit einem Basiswert von 50 Hz zwischen einem Minimalwert von 49 Hz und einem Maximalwert von 51 Hz.

Der Algorithmus des Elektrofahrzeugs ist derart ausgestaltet, dass der Startzeitpunkt für die Ladung der Batterie des Elektrofahrzeugs solange herausgezögert wird, bis eine Ladung zeitlich zwingend erforderlich ist, wenn nicht vorher ein starkes Überangebot an Energie verfügbar ist. Der aktuelle Ladezustand der Batterie des Elektrofahrzeugs erfordert eine Ladedauer von mindestens 3 Stunden bis die Batterie vollständig aufgeladen ist. Spätestens zum Zeitpunkt 8, t = 3h bis zur Nutzung des Elektrofahrzeugs muss der Ladezeitraum beginnen, damit zum Zeitpunkt 11 der Nutzung t = 0h die Batterie vollständig, das heißt mit einem Ladezustand von 100 %, aufgeladen ist. Tritt in dem Zeitraum bis zum Zeitpunkt 8, t = 3h kein starkes Überangebot an Energie auf, bleibt das Ladegerät des Elektrofahrzeugs bis dahin abgeschaltet. Dann beginnt der Ladevorgang erst zum spätmöglichsten Zeitpunkt 8, t = 3h. Der Verlauf des Ladevorgangs ist in Figur 5a mit der durchgezogenen Linie 12 dargestellt.

Figur 5b zeigt zwei mögliche Ausführungsformen. In der ersten, oben bereits beschriebenen Ausführungsform ist der Algorithmus des Elektrofahrzeugs derart ausgestaltet, dass der Ladezeitpunkt so lange hinausgezögert wird, bis eine Ladung zwingend erforderlich ist, wenn nicht vorher ein starkes Überangebot an Energie verfügbar ist. Die Grenzschwelle, ab welcher ein Überangebot an Energie vom Algorithmus erkannt wird, liegt hier leicht unter 51 Hz. In der zweiten Ausführungsform ist der Algorithmus des Elektrofahrzeugs derart ausgestaltet, dass die Grenzschwelle, ab welcher ein Überangebot an Energie, also ein Ansteigen der Netzfrequenz über den Basiswert, vom Algorithmus erkannt wird, mit der Zeit absinkt. Steigt die Netzfrequenz über die Grenzschwelle, wird auch hier der Ladevorgang ausgelöst. Die Grenzschwelle, ab welcher ein Überangebot an Energie vom Algorithmus erkannt wird, sinkt ab einer frei wählbaren Zeit 19 von zum Beispiel t = 9h bis zum Nutzungszeitpunkt 11 kontinuierlich ab. Dabei wird mit fortschreitender Zeit, d. h. mit abnehmender Zeit bis zur Benutzung des Elektrofahrzeugs, der Start des Ladevorgangs selbst bei geringer positiver Abweichung vom Basiswert wahrscheinlicher. Dadurch ist der Algorithmus derart ausgestaltet, dass er bei einer langen verbleibenden Zeitdauer bis zur Nutzung des Elektrofahrzeugs auf ein starkes Überangebot an Energie und damit auf einen niedrigen Preis spekuliert. Mit abnehmender Zeit bis zur Nutzung des Elektrofahrzeugs wird auch ein geringeres Überangebot und damit ein höherer Energiepreis, der jedoch trotzdem unterhalb des Basispreises liegt, akzeptiert.

In Figur 5b zeigt die Y-Achse die Netzfrequenz mit einem Basiswert von 50 Hz zwischen einem Minimalwert von 49 Hz und einem Maximalwert von 51 Hz. Auf der X-Achse ist auch hier die Zeit t in Stunden bis zur nächsten Nutzung des Elektrofahrzeugs aufgetragen. Der Verlauf der Netzfrequenz in Abhängigkeit von der Zeit ist durch die durchgezogene Linie 7 dargestellt. Die Netzfrequenz verläuft zu Beginn in einem Bereich unter dem Basiswert von 50 Hz. Ab dem Zeitpunkt 20, t = 8h bis zum Nutzungszeitpunkt steigt die Netzfrequenz zum ersten Mal über den Basiswert und verläuft dann bis zum Zeitpunkt 14, t = 1h bis zum Nutzungszeitpunkt oberhalb des Basiswertes. Zum Zeitpunkt 14, t= 1h bis zum Nutzungszeitpunkt sinkt die Netzfrequenz wieder unter den Basiswert.

In der ersten oben beschriebenen Ausführungsform, in der der Algorithmus des Elektrofahrzeugs derart ausgestaltet ist, dass der Ladezeitpunkt so lange hinausgezögert wird, bis eine Ladung erforderlich ist, wenn nicht vorher ein starkes Überangebot an Energie verfügbar ist, beginnt die Ladung des Elektrofahrzeugs erst zum spätesten möglichen Zeitpunkt 8, t = 3h bis zum Nutzungszeitpunkt. Da die Netzfrequenz im vorherigen Verlauf nicht signifikant über den Basiswert ansteigt, wird die Grenzschwelle für ein "starkes Überangebot" an Energie nicht erreicht. Der Algorithmus erkennt das Überangebot an Energie unterhalb der vorgegebenen Grenzschwelle nicht und dadurch wird kein Signal zum Start des Ladevorgangs gegeben. Der Zeitpunkt 8 kennzeichnet den Zeitpunkt an dem der Ladevorgang startet. Ab diesem Zeitpunkt ist bis zur Nutzung des Elektrofahrzeugs nur noch die Zeit verblieben, die der minimalen Ladedauer der Batterie des Elektrofahrzeugs entspricht. Der Netzteilnehmer profitiert also in diesem Fall nicht vom Einsatz des erfindungsgemäßen Verfahrens.

In der zweiten oben beschriebenen Ausführungsform ist der Algorithmus des Elektrofahrzeugs derart ausgestaltet, dass die Grenzschwelle, ab der ein Überangebot an Energie vorliegt, absinkt. Das heißt in diesem Fall, dass die Grenzschwelle sinkt, ab der der Algorithmus ein Ansteigen der Netzfrequenz über den Basiswert als "starkes Überangebot" erkennt. Der Verlauf der Grenzschwelle in Abhängigkeit von der Zeit ist als gestrichelte Linie 9 dargestellt. Damit verschiebt sich der Zeitpunkt ab dem der Ladevorgang ausgelöst wird vom Zeitpunkt 8, t= 3h bis zum Nutzungszeitpunkt auf den Zeitpunkt 10, t=5h bis zum Nutzungszeitpunkt. Mit fortschreitender Zeit, d. h. mit abnehmender Zeit bis zur Benutzung des Elektrofahrzeugs, wird der Start des Ladevorgangs selbst bei geringer positiver Abweichung vom Basiswert wahrscheinlicher. Die durchgezogene Linie 10 zeigt den Start des Ladevorgangs an.

Im Vergleich der beiden Ausführungsformen in Figur 5b ist ersichtlich, dass der Ladevorgang mit Absenkung der Grenzschwelle zu einem früheren Zeitpunkt 10 beginnt, als ohne Absenkung der Grenzschwelle 8. Der Verlauf des Ladevorgangs mit Absenkung der Grenzschwelle ist in Figur 5a mit der unterbrochenen Linie 13 dargestellt. Die Batterie des Elektrofahrzeugs ist in diesem Fall bereits zu einem früheren Zeitpunkt 21, t= 2h bis zum Nutzungszeitpunkt vollständig aufgeladen.

Ab dem Zeitpunkt 14, t = 1h bis zum Nutzungszeitpunkt sinkt die Netzfrequenz wieder unter den Basiswert von 50 Hz. Es liegt also im elektrischen Energieversorgungsnetz wieder ein erhöhter Bedarf und damit eine resultierende Energieverknappung vor. Dies bedeutet, dass der Energiepreis pro Energieeinheit über den durchschnittlichen Basispreis, der mit dem Basiswert der Frequenz verknüpft ist, ansteigt.

Im Vergleich der beiden Ausführungsformen mit und ohne Absenkung der Grenzschwelle ergibt sich, dass der Ladevorgang mit Absenkung der Grenzschwelle zu diesem Zeitpunkt 14 bereits abgeschlossen ist. Der Ladevorgang hat also vollständig in Zeitabschnitten stattgefunden, in denen ein Überangebot an Energie vorlag und somit auch ein reduzierter Preis pro Energieeinheit. Bei dem Ladevorgang ohne Absenkung der Grenzschwelle ist der Ladevorgang zum Zeitpunkt 14 noch nicht vollständig abgeschlossen. Erst zum Zeitpunkt 11 ist die Batterie des Elektrofahrzeugs vollständig aufgeladen. In diesem Fall ist also für einen Anteil der entnommenen Energie, der in einem Zeitabschnitt mit einer Netzfrequenz unterhalb des Basiswertes entnommen wurde, ein höherer Preis pro Energieeinheit zu bezahlen. Der Einsatz des erfindungsgemäßen Verfahrens mit Absenkung der Grenzschwelle führt also zu einer substantiellen Einsparung bei den Gesamtenergiekosten des Ladevorgangs der Batterie des Elektrofahrzeugs.

Zusätzlich bewirkt dieses Netzteilnehmerverhalten bei Einsatz des erfindungsgemäßen Verfahrens auch hier einen Beitrag zur Netzwerkstabilisierung: Energie wird bevorzugt in Zeitabschnitten mit einem Überangebot im Energieversorgungsnetz entnommen wohingegen in Zeitabschnitten mit einem Unterangebot an Energie im Energieversorgungsnetz der Verbrauch auf ein Minimum eingeschränkt wird.

## Patentansprüche

1. Verfahren zum Regeln des Verhältnisses zwischen eingespeister und entnommener elektrischer Energie in einem elektrischen Energieversorgungsnetz mit einer Anzahl von Netzteilnehmern, welche Netzteilnehmer Erzeuger und Verbraucher und vorzugsweise zusätzlich Speicher umfassen, wobei als Regelgröße eine Netzzustandsvariable verwendet wird, deren Wert vom Verhältnis zwischen eingespeister und entnommener elektrischer Energie abhängt und die von den Netzteilnehmern aus dem Netz ermittelbar ist,
zumindest ein Teil der Erzeuger die Netzzustandsvariable dezentral aus dem Netz ermitteln und zumindest mittelbar zur Steuerung eines eigenen spezifischen Netzteilnehmerverhaltens betreffend die Einspeisung elektrischer Energie in das Energieversorgungsnetz verwenden,
**dadurch gekennzeichnet,**
**dass** auch zumindest ein Teil der Verbraucher die Netzzustandsvariable dezentral aus dem Netz ermitteln und zumindest mittelbar zur Steuerung eines eigenen spezifischen Netzteilnehmerverhaltens betreffend die Entnahme von elektrischer Energie aus dem Energieversorgungsnetz verwenden,
**dass** die Netzzustandsvariable so mit einer Bewertungsvariable verknüpft wird, dass die Bewertungsvariable bei einem optimalen Verhältnis zwischen
eingespeister und entnommener elektrischer Energie einen Basiswert aufweist und bei einer Abweichung von diesem optimalen Verhältnis einen Wert aufweist, der solcherart vom Basiswert abweicht, dass, bei einem Überschuss von eingespeister elektrischer Energie, das Einspeisen von elektrischer Energie in das Netz mit einem Maluswert und das Entnehmen von elektrischer Energie aus dem Netz mit einem Bonuswert versehen werden, und, bei einem Überschuss von entnommener elektrischer Energie, das Einspeisen von elektrischer Energie in das Netz mit einem Bonuswert und das Entnehmen von elektrischer Energie aus dem Netz mit einem Maluswert versehen werden,
**dass** die Netzteilnehmer, die ihr eigenes spezifisches Netzteilnehmerverhalten abhängig von der Netzzustandsvariable und/oder der Bewertungsvariable steuern, die Netzzustandsvariable in bestimmten Zeitabständen oder laufend ermitteln und diese zur Steuerung des eigenen spezifischen Netzteilnehmerverhaltens verwenden, und zwar mittels eines spezifischen Algorithmus, der eine spezifische zeitabhängige Bedarfsfunktion berücksichtigt und der Prognosen über einen wahrscheinlichen zukünftigen Verlauf des Wertes der Bewertungsvariable
umfasst, wobei mit dem spezifischen Algorithmus die spezifische zeitabhängige Bedarfsfunktion so mit den Prognosen verknüpft wird, dass möglichst wenig Maluswerte und/oder möglichst viele Bonuswerte generiert werden.

2. Verfahren nach Anspruch 1,
**dadurch gekennzeichnet,**
**dass** als Bewertungsvariable ein variabler Preis für eine elektrische Energieeinheit verwendet wird.

3. Verfahren nach einem der Ansprüche 1 oder 2,
**dadurch gekennzeichnet,**
**dass** die Bedarfsfunktion Grenzgrößen enthält, bei deren Erreichen das spezifische Netzteilnehmerverhalten geändert wird.

4. Verfahren nach mindestens einem der Ansprüche 1 bis 3,
**dadurch gekennzeichnet,**
**dass** die Netzzustandsvariable durch die dezentrale Ermittlung und Steuerung des eigenen spezifischen Netzteilnehmerverhaltens zwischen einer Maximalgröße und einer Minimalgröße gehalten wird, und für den Fall, dass die Netzzustandsvariable den Bereich zwischen der Maximalgröße und der Minimalgröße verlässt, zentrale Regulierungsmaßnahmen ergriffen werden, um die Netzzustandsvariable im Sollbereich zwischen Maximal- und Minimalgröße halten.

5. Verfahren nach Anspruch 4,
**dadurch gekennzeichnet,**
**dass** ein Bereich zwischen einer Maximalgröße und einer Minimalgröße der Netzzustandsvariablen in eine bestimmte Anzahl von Teilbereichen aufgespalten wird, welchen Teilbereichen jeweils ein Teilbereichswert der Bewertungsvariablen zugeordnet wird.

6. Verfahren nach Anspruch 5,
**dadurch gekennzeichnet,**
**dass** die Netzteilnehmer, die ihr eigenes spezifisches Netzteilnehmerverhalten abhängig von der Netzzustandsvariable und/oder der Bewertungsvariable steuern, einen Prioritätsalgorithmus verwenden, um einen momentanen Prioritätswert zu ermitteln, welcher einem der Teilbereichswerte der Bewertungsvariablen entspricht, diesen ermittelten momentanen Prioritätswert laufend oder in bestimmten Zeitabständen mit dem momentanen Teilbereichswert vergleichen, und sich mit dem Netz verbinden oder die Verbindung trennen, wenn der momentane Prioritätswert mit dem momentanen Teilbereichswert übereinstimmt.

7. Elektrisches Energieversorgungsnetz mit einer Anzahl von Netzteilnehmern, welche Netzteilnehmer Erzeuger und Verbraucher und vorzugsweise zusätzlich Speicher umfassen, und mit einer Netzzustandsvariable, deren Wert vom Verhältnis zwischen eingespeister und entnommener elektrischer Energie abhängt und die von den Netzteilnehmern aus dem Netz ermittelbar ist,
wobei zumindest ein Teil der Erzeuger so ausgebildet sind, dass sie die Netzzustandsvariable dezentral aus dem Netz ermitteln und zumindest mittelbar zur Steuerung eines eigenen spezifischen Netzteilnehmerverhaltens betreffend die Einspeisung elektrischer Energie in das Energieversorgungsnetz verwenden
**dadurch gekennzeichnet,**
**dass** auch zumindest ein Teil der Verbraucher so ausgebildet sind, dass sie die Netzzustandsvariable dezentral aus dem Netz ermitteln und zumindest mittelbar zur Steuerung eines eigenen spezifischen Netzteilnehmerverhaltens betreffend die Entnahme von elektrischer Energie aus dem Energieversorgungsnetz verwenden,
**dass** die Netzzustandsvariable so mit einer Bewertungsvariable verknüpft ist, dass die Bewertungsvariable bei einem optimalen Verhältnis zwischen eingespeister und entnommener elektrischer Energie einen Basiswert aufweist und bei einer Abweichung von diesem optimalen Verhältnis einen Wert aufweist, der solcherart vom Basiswert abweicht, dass, bei einem Überschuss von eingespeister elektrischer Energie, das Einspeisen von elektrischer Energie in das Netz mit einem Maluswert und das Entnehmen von elektrischer Energie aus dem Netz mit einem Bonuswert versehen werden, und, bei einem Überschuss von entnommener elektrischer Energie, das Einspeisen von elektrischer Energie in das Netz mit einem Bonuswert und das Entnehmen von elektrischer Energie aus dem Netz mit einem Maluswert versehen werden,
**dass** die Netzteilnehmer, die ihr eigenes spezifisches Netzteilnehmerverhalten abhängig von der Netzzustandsvariable und/oder der Bewertungsvariable steuern, so ausgebildet sind, dass sie die Netzzustandsvariable in bestimmten Zeitabständen oder laufend ermitteln und diese zur Steuerung des eigenen spezifischen Netzteilnehmerverhaltens verwenden, und zwar mittels eines spezifischen Algorithmus, der eine spezifische zeitabhängige Bedarfsfunktion berücksichtigt und der Prognosen über einen wahrscheinlichen zukünftigen Verlauf des Wertes der Bewertungsvariable umfasst, wobei mit dem spezifischen Algorithmus die spezifische zeitabhängige Bedarfsfunktion so mit den Prognosen verknüpft wird, dass möglichst wenig Maluswerte und/oder möglichst viele Bonuswerte generiert werden.

8. Netzteilnehmergerät für ein elektrisches Energieversorgungsnetz nach Anspruch 7, das ausgebildet ist, Energie aus dem Stromnetz zu entnehmen **dadurch gekennzeichnet,**
**dass** es so ausgebildet ist, dass es die Netzzustandsvariable in bestimmten Zeitabständen oder laufend aus dem Netz ermittelt und zumindest mittelbar zur Steuerung eines eigenen spezifischen Netzteilnehmerverhaltens betreffend die Entnahme von elektrischer Energie aus dem Energieversorgungsnetz verwendet, und zwar mittels eines spezifischen Algorithmus, der eine spezifische zeitabhängige Bedarfsfunktion berücksichtigt und der Prognosen über einen wahrscheinlichen zukünftigen Verlauf des Wertes der Bewertungsvariable umfasst, wobei mit dem spezifischen Algorithmus die spezifische zeitabhängige Bedarfsfunktion so mit den Prognosen verknüpft wird, dass möglichst wenig Maluswerte und/oder möglichst viele Bonuswerte generiert werden.

9. Netzteilnehmergerät nach Anspruch 8,
**dadurch gekennzeichnet,**
**dass** es so ausgebildet ist, dass die Bedarfsfunktion Grenzgrößen enthält, bei deren Erreichen das spezifische Netzteilnehmerverhalten geändert wird.

10. Netzteilnehmergerät nach einem der Ansprüche 8 oder 9,
**dadurch gekennzeichnet,**
**dass** es zur Verwendung in einem Verfahren nach Anspruch 6 dient und so ausgebildet ist, dass es einen Prioritätsalgorithmus verwendet, um einen momentanen Prioritätswert zu ermitteln, welcher einem Teilbereichswert der Bewertungsvariablen entspricht, diesen ermittelten momentanen Prioritätswert laufend oder in bestimmten Zeitabständen mit dem momentanen Teilbereichswert vergleicht, und sich mit dem Netz verbindet oder die Verbindung trennt, wenn der momentane Prioritätswert mit dem momentanen Teilbereichswert übereinstimmt.

11. Steuermodul für ein Netzteilnehmergerät oder eine Gruppe von Netzteilnehmergeräten für ein elektrisches Energieversorgungsnetz nach Anspruch 7 zur Durchführung des Verfahrens nach mindestens einem der Ansprüche 1 bis 6.

12. Software für ein Steuermodul nach Anspruch 11 zur Durchführung des Verfahrens nach mindestens einem der Ansprüche 1 bis 6.

## Claims

1. Method to control the ratio between electrical energy injected into and extracted from an electric energy supply grid with a number of participants, which include energy producers and consumers and preferably also storage devices, where a grid state variable is used as a control variable whose value depends on the ratio between energy injected and extracted, and which can be determined by the grid participants from the grid itself,
and at least some of the grid participants determine this grid state variable in a decentralised way from the grid and use it at least indirectly to control their own behaviour concerning the injection of electric energy into the electric grid,
**characterized in that**,
also at least some of the consumers determine this grid state variable in a decentralized way and use it at least indirectly to control their own behaviour concerning the extraction of electric energy from the energy supply grid,
that the grid state variable is coupled with a valuation variable such that this valuation variable has a base value if the ratio between electric energy injected into and extracted from the grid is optimal, and if this ratio deviates from this optimum the valuation variable deviates from the base value such that in case of surplus of electrical energy injected, injection of energy into the grid creates a malus and extraction a bonus value, and, in case of surplus energy extracted, injection of energy into the grid creates a bonus and extraction a malus value,
and the grid participants which control their own specific grid participation behaviour that depends on the grid state variable and/or the valuation variable, determine the grid state variable within certain intervals or continuously and use it to control their own specific participation behaviour, and use a specific algorithm which considers a specific time dependent demand function and includes predictions of likely future developments of the value of the valuation variable, the specific algorithm combining the specific time dependent demand function with the predictions such that as little malus and/or as many bonus values as possible are generated.

2. Method according to claim 1,
**characterized in that**,
a variable price per electric energy unit is used as the valuation variable.

3. Method according to one of claims 1 or 2,
**characterized in that**,
the demand function contains limit values and the specific grid participation behaviour changes when these are reached.

4. Method according to any one of the claims 1-3,
**characterized in that**,
the grid state variable is maintained between a maximum and a minimum value by decentralized determination and control of the specific grid participation behaviour, and in case the grid state variable leaves the range between maximum and minimum values, central regulatory control measures are taken to ensure the grid state variable stays within the desired range between maximum and minimum values.

5. Method according to claim 4,
**characterized in that**,
a range between a maximum and minimum value of the grid state variable is split into a certain number of sub ranges, and a sub range value of the valuation variable is assigned to each sub range.

6. Method according to claim 5,
**characterized in that**,
the grid participants which control their own specific grid participation behaviour depending on the grid state variable and/or the valuation variable, use a priority algorithm to determine a current priority value which is equivalent to a sub range value of the valuation variable, and compare this current priority value continuously or within certain intervals with the current sub range value and connect to or disconnect from the grid if the current priority value equals the current sub range value.

7. Electric energy supply grid with a number of participants which include producers and consumers and preferably also storage devices, and with a grid state variable whose value depends on the ratio between electric energy injected and extracted, and which can be determined by grid users from the grid itself,
where at least some of the producers are provided such that they determine the grid state variable in a decentralized way from the grid and at least indirectly use it to control their own specific grid participation behaviour concerning the injection of electric energy into the grid,
**characterized in that**,
also at least some of the consumers are provided such that they determine the grid state variable in a decentralized way from the grid and at least indirectly use it to control their own specific grid participation behaviour concerning the extraction of electric energy from the grid,
that the grid state variable is coupled with the valuation variable such that the valuation variable assumes a base value when the ratio between electric energy injected and extracted is optimal, and if this ratio deviates from the optimum the valuation variable also deviates from the base value such that, in case of surplus electric energy being injected, the injection of electric energy leads to the generation of malus, and extraction to the generation of bonus values, and in case of surplus electric energy being extracted, the injection of electric energy leads to the generation of bonus, and extraction to the generation of malus values,
that the grid participants which control their own specific grid participation behaviour depending on the grid state variable and/or the valuation variable are provided such that they determine the grid state variable continuously or within certain intervals and use it to control of their own specific grid participation behaviour, and do this with a specific algorithm which considers a specific time dependent demand function and includes predictions of likely future developments of the valuation variable, and where the specific algorithm combines the specific time dependent demand function with the predictions such that the number of malus values is minimized and/or the number of bonus values is maximized.

8. Equipment for participants of an electric energy supply grid according to claim 7 provided to extract energy from the grid,
**characterized in that**,
it is provided to determine the grid state variable within certain time intervals or continuously from the grid and use it at least indirectly to control its own specific grid participation behaviour concerning the extraction of electric energy from the grid, using a specific algorithm which considers a specific time dependent demand function as well as predictions of likely developments of the valuation variable, and where a specific algorithm combines the specific time dependent demand function with the predictions of the valuation variable such as few malus values and/or as many bonus values as possible are generated.

9. Equipment for participants of an electric energy supply grid according to claim 8,
**characterized in that**,
it is provided such that the demand function contains limit values and the specific grid participation behaviour changes when these are reached.

10. Equipment for participants of an electric energy supply grid according to any one of the claims 8 or 9,
**characterized in that**,
it serves to be used in a method according to claim 6 and is provided to use a priority algorithm to determine a current priority value that is equivalent to the sub range value of the valuation variable, that it compares this current priority value continuously or within certain intervals with the current sub range value, and connects to or disconnects from the grid if the current priority value and sub range value are equal.

11. Control module for one or a group of equipment of participants of an electric energy supply grid according to claim 7 to perform the method according to any one of claims 1 to 6.

12. Software for a control module according to claim 11 to perform the method according to any one of claims 1 to 6.

## Revendications

1. Procédé de réglage du rapport entre énergie électrique injectée et prélevée dans un réseau d'alimentation en énergie électrique avec une pluralité d'usagers du réseau, lesquels usagers du réseau comprennent des producteurs, des consommateurs et de préférence également des accumulateurs, la grandeur de réglage utilisée étant une variable d'état du réseau dont la valeur dépend du rapport entre énergie électrique injectée et prélevée et qui peut être déterminée à partir du réseau par les usagers du réseau,
au moins une partie des producteurs déterminant la variable d'état du réseau de manière décentralisée à partir du réseau et l'utilisant au moins indirectement pour commander un comportement d'usager du réseau spécifique qui leur est propre en ce qui concerne l'injection d'énergie électrique dans le réseau d'alimentation en énergie,
**caractérisé en ce**
**qu'**aussi au moins une partie des consommateurs déterminent la variable d'état du réseau de manière décentralisée à partir du réseau et l'utilisent au moins indirectement pour commander un comportement d'usager du réseau spécifique qui leur est propre en ce qui concerne le prélèvement d'énergie électrique du réseau d'alimentation en énergie,
**que** la variable d'état du réseau est associée à une variable d'évaluation de sorte que la variable d'évaluation présente une valeur de base pour un rapport optimal entre énergie électrique injectée et prélevée et, en cas de déviation de ce rapport optimal, présente une valeur qui dévie de la valeur de base de telle façon qu'en cas d'excédent d'énergie électrique injectée, l'injection d'énergie électrique dans le réseau est affectée d'une valeur de malus et le prélèvement d'énergie électrique du réseau d'une valeur de bonus, et, en cas d'excédent d'énergie électrique prélevée, l'injection d'énergie électrique dans le réseau est affectée d'une valeur de bonus et le prélèvement d'énergie électrique du réseau d'une valeur de malus, que les usagers du réseau qui commandent leur propre comportement d'usager du réseau spécifique en fonction de la variable d'état du réseau et/ou de la variable d'évaluation déterminent la variable d'état du réseau à des intervalles de temps définis ou en continu et utilisent celle-ci pour commander leur propre comportement d'usager du réseau spécifique, et ce au moyen d'un algorithme spécifique qui tient compte d'une fonction de besoin spécifique en fonction du temps et qui comprend des prévisions sur une évolution future probable de la valeur de la variable d'évaluation, la fonction de besoin spécifique en fonction du temps étant combinée aux prévisions au moyen de l'algorithme spécifique de manière à générer le moins possible de valeurs de malus et/ou le plus possible de valeurs de bonus.

2. Procédé selon la revendication 1,
**caractérisé en ce**
**qu'**un prix variable pour une unité d'énergie électrique est utilisé comme variable d'évaluation.

3. Procédé selon l'une des revendications 1 ou 2,
**caractérisé en ce**
**que** la fonction de besoin contient des grandeurs limites à l'atteinte desquelles le comportement d'usager du réseau spécifique est modifié.

4. Procédé selon au moins l'une des revendications 1 à 3,
**caractérisé en ce**
**que** la variable d'état du réseau est maintenue entre une grandeur maximale et une grandeur minimale par la détermination décentralisée et la commande du propre comportement d'usager du réseau spécifique et, dans le cas où la variable d'état du réseau quitte la plage entre la grandeur maximale et la grandeur minimale, des mesures centrales de régulation sont prises pour maintenir la variable d'état du réseau dans la plage de consigne entre grandeur maximale et minimale.

5. Procédé selon la revendication 4,
**caractérisé en ce**
**qu'**une plage entre une grandeur maximale et une grandeur minimale des variables d'état du réseau est divisée en un nombre défini de plages partielles, une valeur de plage partielle des variables d'évaluation étant associée à chacune des plages partielles.

6. Procédé selon la revendication 5,
**caractérisé en ce**
**que** les usagers du réseau qui commandent leur propre comportement d'usager du réseau spécifique en fonction de la variable d'état du réseau et/ou de la variable d'évaluation utilisent un algorithme de priorité pour déterminer une valeur de priorité momentanée, laquelle correspond à une des plages partielles des variables d'évaluation, comparent cette valeur de priorité momentanée déterminée en continu ou à des intervalles de temps définis avec la valeur de plage partielle momentanée et se connectent au réseau ou coupent la connexion lorsque la valeur de priorité momentanée coïncide avec la valeur de plage partielle momentanée.

7. Réseau d'alimentation en énergie électrique avec une pluralité d'usagers du réseau, lesquels usagers du réseau comprennent des producteurs, des consommateurs et de préférence également des accumulateurs, et avec une variable d'état du réseau dont la valeur dépend du rapport entre énergie électrique injectée et prélevée et qui peut être déterminée à partir du réseau par les usagers du réseau,
au moins une partie des producteurs étant conçus pour déterminer la variable d'état du réseau de manière décentralisée à partir du réseau et l'utiliser au moins indirectement pour commander un comportement d'usager du réseau spécifique qui leur est propre en ce qui concerne l'injection d'énergie électrique dans le réseau d'alimentation en énergie,
**caractérisé en ce**
**qu'**aussi au moins une partie des consommateurs sont conçus ou réalisés pour déterminer la variable d'état du réseau de manière décentralisée à partir du réseau et l'utiliser au moins indirectement pour commander un comportement d'usager du réseau spécifique qui leur est propre en ce qui concerne le prélèvement d'énergie électrique du réseau d'alimentation en énergie,
**que** la variable d'état du réseau est associée à une variable d'évaluation de sorte que la variable d'évaluation présente une valeur de base pour un rapport optimal entre énergie électrique injectée et prélevée et, en cas de déviation de ce rapport optimal, présente une valeur qui dévie de la valeur de base de telle façon qu'en cas d'excédent d'énergie électrique injectée, l'injection d'énergie électrique dans le réseau est affectée d'une valeur de malus et le prélèvement d'énergie électrique du réseau d'une valeur de bonus, et, en cas d'excédent d'énergie électrique prélevée, l'injection d'énergie électrique dans le réseau est affectée d'une valeur de bonus et le prélèvement d'énergie électrique du réseau d'une valeur de malus, que les usagers du réseau qui commandent leur propre comportement d'usager du réseau spécifique en fonction de la variable d'état du réseau et/ou de la variable d'évaluation sont conçus pour déterminer la variable d'état du réseau à des intervalles de temps définis ou en continu et utiliser celle-ci pour commander leur propre comportement d'usager du réseau spécifique, et ce au moyen d'un algorithme spécifique qui tient compte d'une fonction de besoin spécifique en fonction du temps et qui comprend des prévisions sur une évolution future probable de la valeur de la variable d'évaluation, la fonction de besoin spécifique en fonction du temps étant combinée aux prévisions au moyen de l'algorithme spécifique de manière à générer le moins possible de valeurs de malus et/ou le plus possible de valeurs de bonus.

8. Appareil d'usager du réseau pour un réseau d'alimentation en énergie électrique selon la revendication 7, qui est conçu pour prélever de l'énergie du réseau électrique,
**caractérisé en ce**
**qu'**il est conçu ou réalisé pour déterminer la variable d'état du réseau à des intervalles de temps définis ou en continu à partir du réseau et l'utiliser au moins indirectement pour commander un comportement d'usager du réseau spécifique qui leur est propre en ce qui concerne le prélèvement d'énergie électrique du réseau d'alimentation en énergie, et ce au moyen d'un algorithme spécifique qui tient compte d'une fonction de besoin spécifique en fonction du temps et qui comprend des prévisions sur une évolution future probable de la valeur de la variable d'évaluation, la fonction de besoin spécifique en fonction du temps étant combinée aux prévisions au moyen de l'algorithme spécifique de manière à générer le moins possible de valeurs de malus et/ou le plus possible de valeurs de bonus.

9. Appareil d'usager du réseau selon la revendication 8,
**caractérisé en ce**
**qu'**il est conçu ou réalisé de façon que la fonction de besoin contienne des grandeurs limites à l'atteinte desquelles le comportement d'usager du réseau spécifique est modifié.

10. Appareil d'usager du réseau selon l'une des revendications 8 ou 9,
**caractérisé en ce**
**qu'**il est utilisé dans un procédé selon la revendication 6 et est conçu ou réalisé pour utiliser un algorithme de priorité pour déterminer une valeur de priorité momentanée, laquelle correspond à valeur de plage partielle des variables d'évaluation, comparer cette valeur de priorité momentanée déterminée en continu ou à des intervalles de temps définis avec la valeur de plage partielle momentanée et se connecter au réseau ou couper la connexion lorsque la valeur de priorité momentanée coïncide avec la valeur de plage partielle momentanée.

11. Module de commande pour un appareil d'usager du réseau ou un groupe d'appareils d'usager du réseau pour un réseau d'alimentation en énergie électrique selon la revendication 7 pour mettre en oeuvre le procédé selon au moins l'une des revendications 1 à 6.

12. Logiciel pour un module de commande selon la revendication 11 pour mettre en oeuvre le procédé selon au moins l'une des revendications 1 à 6.
